# EUROPEAN PATENT APPLICATION

(11) **EP 2 889 081 A1**
(43) Date of publication of application: **01.07.2015**
(21) Application number: 13831152.7
(22) Date of filing: 16.08.2013
(51) Int. Cl.: B01F 7/08, B29B 7/18, B29B 7/46

(54) **KNEADING ROTOR AND KNEADING MACHINE**

(30) Priority: 21.08.2012 JP 2012182676
(71) Applicant: Kabushiki Kaisha Kobe Seiko Sho (Kobe Steel, Ltd.), Kobe-shi, Hyogo 651-8585 (JP)
(72) Inventor: YAMADA Sayaka, kobe-shi, Hyogo 651-2271 (JP); YAMAGUCHI Kazuo, Takasago-shi, Hyogo 676-8670 (JP); FUKUI Tsugushi, Takasago-shi, Hyogo 676-8670 (JP); KURODA Yoshinori, Takasago-shi, Hyogo 676-8670 (JP); UDA Takaya, Takasago-shi, Hyogo 676-8670 (JP)
(74) Representative: TBK
(86) International application number: PCT/JP2013/072017
(87) International publication number: WO 2014/030598

(57) **Abstract**

This kneading rotor (1) is rotatably disposed about a horizontally oriented shaft center, the kneading rotor including at least two or more of kneading flights (7) that are disposed about the shaft center and knead a material. In a cross-section perpendicular to the shaft center of the kneading rotor (1), the kneading flights (7) are provided with working faces (9) that face the material when the kneading rotor (1) is rotated. Recesses (10) where a part of the working faces (9) are partially recessed radially inward are formed on the working faces (9) of the kneading flights (7).

## Description

### TECHNICAL FIELD

The present invention relates to a kneading rotor and a kneading machine capable of kneading a material while restraining a temperature rise of the material.

### BACKGROUND ART

In general, in a kneading machine such as a continuous kneading machine or an extruder, a material such as a polymer resin pellet or a powder additive is supplied into a barrel, and a pair of kneading rotors inserted into the barrel are rotated to thereby knead the material within the barrel.

These kneading rotors each are provided, about their shaft centers, with a plurality of kneading flights for kneading the material. When each kneading rotor is rotated, the material within the barrel is tearingly separated from each other. The kneading rotor in the kneading machine is thus generally provided with the kneading flights that each have a cross-section suitable for shearing the material.

For example, Fig. 4 of Patent Document 1 discloses a kneading rotor having kneading flights suitable for shearing the material. Note that, for easy understanding, a kneading rotor having substantially the same shape as a kneading rotor shown in Fig. 4 of Patent Document 1 is illustrated as prior art 1 in Fig. 2 (b) of the present description.

As shown in Fig. 2 (b), the kneading rotor in Patent Document 1 (Prior Art 1) has three kneading flights about the horizontally oriented shaft center, each of which kneading flights has a triangular cross-section that projects radially outwardly. The projecting end of this kneading flight is a portion referred to as a tip portion and located in the neighborhood of an inner circumferential surface of the barrel. And the operating mechanism is that a narrow clearance is provided between the tip portion and the inner circumferential surface of the barrel, so that the material is introduced into this clearance to thereby apply a shear force to the material.

In addition, in a cross-section perpendicular to the shaft center of the kneading rotor, the kneading flight has a slanted face so as to be continuously connected with the side of the tip portion. Of the slanted faces, those that face the material when the kneading rotor rotates are working faces.

### CITATION LIST

### PATENT DOCUMENT

Patent Document 1: JP H06-41135 (Refer to Fig. 4)

### SUMMARY OF THE INVENTION

### Technical Problems

Incidentally, when the material is kneaded using kneading flights in Patent Document 1 as described above, and if a shear force that is applied to the material is too great, then in some cases the temperature of the material increases over and above what is needed. The rise of the material temperature is greatly affected by an angle of inclination of the above described working face.

For example, in the kneading rotor shown in Fig. 4 of Patent Document 1, in other words, the kneading rotor having a cross-section as shown in Fig. 2 (b) of the present description, the working face is in a radially outwardly convex shape, as shown in an ovally encircled area in the figure. This convex working face is not greatly slanted relative to the inner wall surface of the barrel, and the distance from the surface of the kneading flight to the inner wall surface of the barrel is comparatively short. When such a kneading flight is employed which has many places such that the distance is short between the surface of the kneading flight and the inner wall surface of the barrel, a shear flow is dominatingly produced in the material within the barrel, thus resulting in application of a great amount of shear force to the material. Therefore, the rise of the material temperature cannot be avoided.

Note that when, for the purpose of restraint of the rise of the material temperature, the working face of this kneading rotor is fattened, a further problem is created in that left and right lateral kneading rotors are spaced very far from each other, resulting in insufficiently kneaded material, thus causing localized variations in temperature within the material to be increased.

The present invention is made in light of the above described problems, and its object is to provide a kneading rotor and a kneading machine capable of positively restraining a temperature rise of a material and localized variations in temperature within the material.

### Solution to Problems

In order to solve the above described problems, the following technical measures are taken for a kneading rotor according to the present invention.

That is, a kneading rotor according to the present invention is rotatably disposed about a horizontally oriented shaft center, the kneading rotor including at least two or more of kneading flights that are disposed about the shaft center and knead a material, characterized in that in a cross-section perpendicular with the shaft center of the kneading rotor, the kneading flights each have a working face that faces the material when the kneading rotor is rotated, and that a recess resulting from the working face being partially recessed radially inwardly is formed on the working face of each kneading flight.

Preferably, in a cross-section perpendicular to the shaft center of the kneading rotor, a convex portion resulting from a surface of the kneading flight partially projecting radially outwardly may be formed between circumferentially adjacent kneading flights, and a place between a tip portion of the kneading flight and the top of the convex portion may be made to be the recess.

Preferably, an outer peripheral surface of the convex portion may be formed into a cylindrical surface having the shaft center of the kneading rotor as the center line.

Preferably, the convex portion is formed such that the diameter from the shaft center of the kneading rotor to the top of the convex portion may be 0.6 times or more the diameter from the shaft center of the kneading rotor to the tip portion of the kneading flight.

On the other hand, the kneading machine according to the present invention is characterized to include the above described kneading rotor and a barrel having a circular through-hole extended therethrough into which the kneading rotor can be inserted.

### Advantageous Effects of the Invention

According to the kneading rotor and kneading machine of the present invention, a temperature rise of a material and localized variations in temperature within the material can positively be restrained.

### BRIEF DESCRIPTION OF DRAWINGS

[Fig. 1] Fig. 1 is a front cross-sectional view of a kneading machine according to the present invention.
[Fig. 2] Fig. 2 (a) is a cross-sectional view of a kneading rotor according to a first embodiment of the present invention; Fig. 2 (b) is a cross-sectional view of a kneading rotor of a prior art 1; and Fig. 2 (c) is a cross-sectional view of a kneading rotor of a prior art 2.
[Fig. 3] Fig. 3 is an enlarged cross-sectional view of the kneading rotor according to the first embodiment.
[Fig. 4] Fig. 4 is a view showing cross-sections of the kneading rotor resulting from a value of ds/dr being (a) 0.72, (b) 0.60 and (c) 0.55, where the value of dr/db is 0.85 for each case.
[Fig. 5] Fig. 5 is a view showing cross-sections of the kneading rotor resulting from the value of ds/dr being set to (a) 0.60 and (b) 0.55, where the value of dr/db is 0.98 for each case.
[Fig. 6] Fig. 6 is a view of comparison between the present embodiment and prior arts in terms of an influence on temperature rise per revolution; Fig. 6 (a) shows results for when the dr/db value is 0.85, and Fig. 6 (b), those for when the dr/db value is 0.98.
[Fig. 7] Fig. 7 is a view of comparison between the present embodiment and prior arts in terms of an influence on the standard deviation of the material temperature; Fig. 7 (a) shows results for when the dr/db value is 0.85 and Fig. 7 (b), those for when the dr/db value is 0.98.
[Fig. 8] Fig. 8 is a cross-sectional view of a kneading rotor according to a second embodiment.

### DESCRIPTION OF EMBODIMENTS

Embodiments of a kneading rotor 1 according to the present invention and a kneading machine 2 provided with this kneading rotor 1 will be described hereinafter in detail with reference to the drawings.

### (First Embodiment)

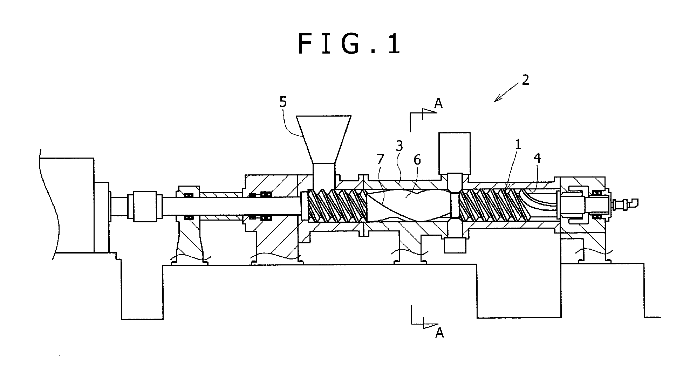

Fig. 1 shows the kneading machine 2 provided with the kneading rotor 1 according to a first embodiment (the kneading machine 2 according to the first embodiment).

As shown in Fig. 1, the kneading machine 2 according to the first embodiment is the one that kneads a material such as a polymer resin pellet or a powder additive, and includes the knead rotor 1 that kneads the material. In the first embodiment, the kneading machine 2 according to the present invention is described by exemplifying a double shaft continuous kneading machine of different direction rotation type which includes a double shaft of the kneading rotors 1 that each rotate in different directions. Note that, other than the double shaft continuous kneading machine of different direction rotation type, a double shaft continuous kneading machine of the same direction rotation type, a double shaft extruder, or a batch type kneading machine can also be used as the kneading machine 2 according to the present invention.

The kneading machine 2 includes a barrel 3 having a void in its interior, and a pair of the left and right kneading rotors 1, 1 that are housed within the barrel 3. Within the barrel 3, the two circular through-holes 4 each capable of housing the kneading rotor 1 are perforated as being aligned in parallel rows. Inner wall surfaces of the two circular through-holes 4, 4 are configured or designed to partially overlap each other, enabling the material to be moved from one circular through-hole 4 to another. These two circular through-holes 4, 4 each have one kneading rotor 1 inserted therein. The kneading machine 2 is of double shaft type that has in total two shafts of the kneading rotor 1.

Note that, in the subsequent description, when the kneading rotor 1 and the kneading machine 2 are to be described, the left-hand side of Fig. 1 is referred to as a location upstream of the machine and the right-hand side thereof is referred to as a location downstream of the machine. Further, when describing the kneading rotor 1 and the kneading machine 2, the left and right lateral direction in Fig. 1 is referred to as an axial direction and moreover, the direction perpendicular relative to the axial direction is referred to as an axis perpendicular direction. In addition, relative to the shaft center, the direction far from the shaft center is referred to as radially outward portion, and the direction closer to the shaft center is referred to as radially inward portion.

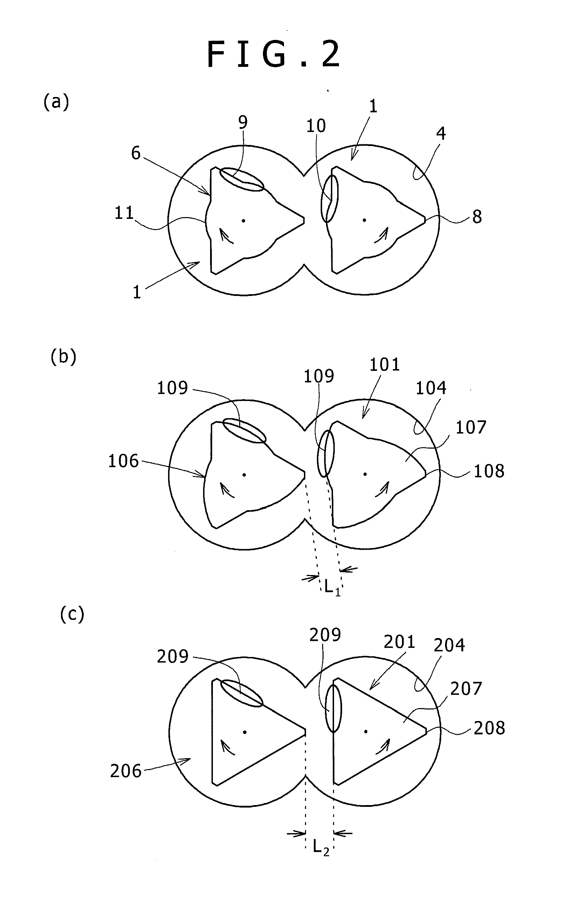

As shown in Figs. 1 and 2 (a), the barrel 3 is formed into a long cylindrical shape in the horizontal direction. As described above, the two circular through-holes 4, 4 are formed as being aligned in parallel rows into the barrel 3 so as to be oriented from the location upstream of the machine to the location downstream thereof (in the axial direction). Disposed in an intermediate location in the axial direction of the barrel 3 is a hopper 5 through which a material is supplied into the barrel 3.

The circular through-holes 4 are substantially cylindrical lateral holes formed by hollowing out the barrel 3 in the horizontal direction, and its cross-section in the axis perpendicular direction is made to be substantially circular. A pair of the left and right circular through-holes 4 are aligned in parallel in the horizontal direction, and formed into a so-called "eyeglass shape" such that their inner walls are partially jointed together.

The kneading rotor 1 is the one that kneads a material supplied into the barrel 3, and formed into an elongated shape in the axial direction. The pair of left and right kneading rotors 1 is provided, so that each rotor is configured to be inserted into the pair of the circular through-holes 4 as described above. Of the pair of the kneading rotors 1, the kneading rotor 1 on the left-hand side rotates clockwise and the kneading rotor 1 on the right-hand side rotates counter-clockwise, as viewed from the location upstream of the machine.

The kneading rotor 1 is formed by axially combining various types of segments, and a plurality of rotor segments 6 (segments for kneading) is provided in an intermediate portion in the axial direction.

The rotor segments 6 are the ones suitable for in particular kneading among various types of segments. The rotor segments 6 are each formed into a distorted triangle in cross-section in the axis perpendicular direction, and includes three kneading flights 7 having radially outwardly projecting peak ends about the shaft center. These kneading flights 7 each have at their projecting peak ends a tip potion 8 that faces the inner wall surface of the barrel 3. As the kneading rotor 1 rotates, the tip portion 8 of each of the kneading flights 7 rotates so as to pass the closer portion of the inner wall surface of the barrel 3, so that the material attached to the inner wall surface of the barrel 3 can be scraped without leaving anything behind to knead the material.

Incidentally, each kneading flight 7 of the above described kneading rotor 1 is provided with a slanted working face 9 that faces the material when the kneading rotor 1 rotates. The working face 9 is formed so as to be circumferentially continuous relative to the tip portion 8 of the kneading flight 7, and for the kneading rotor 1 on the left-hand sides of Fig. 2 (a) to Fig. 2 (c) the working face is adjacently provided clockwise (rotation direction) as viewed from the tip portion 8. This working face 9 can be of various shapes and have a slanted angle, as shown in Fig. 2 (a) to Fig. 2 (c).

For example, in a kneading rotor 101 of a prior art 1 as shown in Fig. 2 (b), a working face 109 is formed in an ovally encircled area in the figure, as a slanted face relative to an inner wall surface of a circular through-hole 104 of a barrel. This working face 109 of the prior art 1 is formed into a curved convex bulging out radially outwardly (outer peripheral side), and does not include a very large slanted angle relative to the inner wall surface of the circular through-holes 104 of the barrel. In other words, the working face 109 has a slanted angle that conforms to the inner wall surface of the circular through-hole 104 of the barrel. Therefore, in the kneading rotor 101 of the prior art 1, the working face 109 protrudes toward the inner wall surface (radially outwardly) of the circular through-hole 104 of the barrel, and the distance is accordingly reduced between the working face 109 and the inner wall surface of the circular through-holes 104 of the barrel.

In this way, it is known that, in a place where the distance between the circular through-hole 104 of the barrel and the surfaces of the kneading flights 107 is reduced, it becomes easy for a shear force to act on the material that is to be kneaded within the barrel. In other words, when the kneading rotor 101 according to the prior art 1 is employed, a shear flow is dominatingly generated by the kneading flight 107, resulting in more temperature rise in the kneading material with developing kneading action.

Meanwhile, in the kneading rotor 201 according to the prior art 2 as shown in Fig. 2 (c), a working face 209 is formed, in an ovally encircled area in the figure, as a slanted face relative to an inner wall surface of a circular through-hole 204 of a barrel. The difference between the working face 209 of the prior art 2 and that of the prior art 1 is that the working face 209 of the prior art 2 is formed into a planar face that connects by the minimum length between two tip portions 208 of the circumferentially adjacent kneading flights 207. That is, unlike the prior art 1, the working face 209 of the prior art 2 does not bulge out radially outwardly, and includes a very large slanted angle relative to the inner wall surface of the circular through-holes 204 of the barrel. In this way, the working face 209 has a large slanted angle and accordingly, the number of places where the distance between the inner wall surface of the circular through-hole 204 of the barrel and the surfaces of the kneading flights 207 is reduced decreases than that of the prior art 1. The shear force applied to the material becomes smaller than that of the prior art 1. Thus, when the kneading rotor 201 of the prior art 2 is employed, the rise of the material temperature is allowed to be restrained.

However, when the kneading rotor 201 of the prior art 2 is employed, the working face 109 will not bulge out radially outwardly, and accordingly a rotor clearance L2 formed between the left and right lateral kneading rotors 201 becomes greater as compared to a rotor clearance L1 formed between the left and right lateral kneading rotors 101 of the prior art 1. In this way, when the rotor clearance formed between the left and right lateral kneading rotors becomes expanded, the shear force applied to the material varies greatly, resulting in increased localized variations of the temperature within the material.

Therefore, in the kneading rotor 1 of the present invention, as shown in Fig. 2 (a), the working face 9 of the kneading flight 7 is formed with a recess 10 formed by the working face 9 being partially recessed radially inwardly. If such a recess 10 is formed on the working face 9, the inner wall surface of the circular through-hole 4 of the barrel 3 is accordingly spaced apart from the surface of the kneading flight 7 and the shear force applied to the material is thereby reduced, which allows the rise of the material temperature to be restrained. In addition, since the surface of the kneading flight 7, other than the place where the recess 10 is formed, can also be caused to project radially outwardly, the rotor clearance formed between the left-right lateral kneading rotors 1 can be reduced, enabling the restraint of localized variations in temperature within the material.

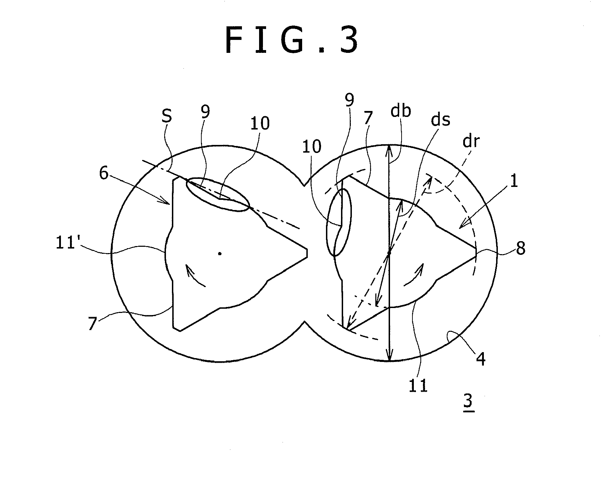

More specifically, as shown in Fig. 3, the kneading rotor 1 according to the first embodiment is formed with a convex portion 11 that results from the surface of the kneading flight 7 partially projecting radially outwardly, between the circumferentially adjacent kneading flights 7, 7, in a cross-section perpendicular to the shaft center of the kneading rotor 1. And a place between a top 11' of this convex potion 11 and the tip portion 8 of the kneading flight 7 becomes recessed, contrary to the convex potion 11, by providing this convex portion 11, which place is the above described recess 10.

The working face 9 formed on the kneading flight 7 of the kneading rotor 1 according to the first embodiment 1, the convex portion 11 and the recess 10 will next be described in further detail.

The working face 9, as shown in the ovally encircled area in Fig. 3, is a face that is slanted so as to face the material when the kneading rotor 1 rotates, and is formed at a circumferentially continuous position relative to the tip portion 8 (adjacent position). This working face 9 is formed so as to be slanted circumferentially, so that when the kneading rotor 1 rotates, the material within the barrel 3 makes contact with the working face 9.

The convex portion 11 is the one formed by the surface of the kneading flight 7 being caused to partially project radially outwardly, as described above, and an outer peripheral surface thereof is formed into a cylindrical surface having the shaft center of the kneading rotor 1 as the center line. That is, in the cross-section perpendicular to the shaft center of the kneading rotor 1, the convex potion 11 is in a shape of a circular arc having the shaft center of the kneading rotor 1 as its center of curvature, and is bulged out so as to project radially outwardly from a straight line that connects between the circumferentially adjacent tip portions 8.

The recess 10 is a resultingly formed portion by the above described convex portion 11 being formed. The recess 10 is configured or designed to be recessed radially inwardly than a reference line S (shown in straight dash-dot lines in the figure) that connects between the tip portion 8 of the kneading flight 7 and the top 11' (peak) of the above described convex portion 11.

Incidentally, even though, as described above, a non-convex portion is made to be the recess 10 by forming the convex portion 11 between the tip portions 8, a very small amount of projection of the convex portion 11 to be formed would not provide the sufficiently deep recess 10. Therefore, the convex portion 11 is preferably formed such that a radius from the shaft center of the kneading rotor 1 to the top 11' of the convex potion 11 may be 0.6 or more times a radius from the shaft center of the kneading rotor 1 to the tip portion 8 of the kneading flight 7.

The amount of projection of the convex portion 11, in other words, the radius from the shaft center of the kneading rotor 1 to the top 11' of the convex portion 11 will be described next.

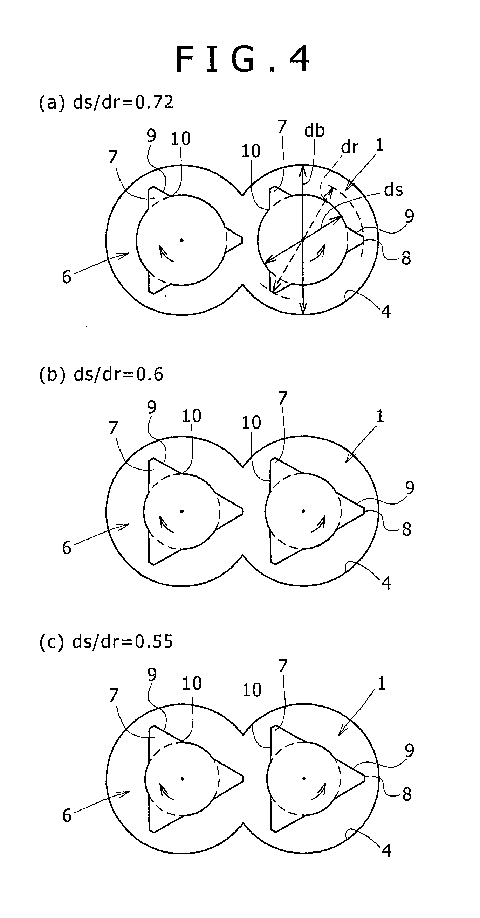

For example, the inside diameter of the barrel 3, i.e., the diameter of the inner wall surface of the barrel 3 circular through-hole 4 is assumed to be db. Further, the maximum outside diameter of the kneading rotor 1, i.e., two times the distance from the shaft center of the kneading rotor 1 to the tip portion 8 (the top of the flight) is assumed to be dr. And three types of the kneading rotors 1, as shown in Figs 4 (a) to 4 (c), are considered such that the ratio of db and dr (dr/db) is 0.85.

When, as shown in Fig. 4 (a), the outside diameter ds of the convex portion 11 is 0.72 times the maximum outside diameter dr of the kneading rotor 1 (when ds/dr = 0.72), a visible outline between the convex portion 11 and the tip portion 8 is obviously bent radially inwardly in a shape of L, and the recess 10 is recognized to be clearly recessed.

However, as shown in Fig. 4 (b), when the outside diameter ds of the convex portion 11 becomes 0.6 times the maximum outside diameter dr of the kneading rotor 1, the recess 10 formed between the convex portion 11 and the tip portion 8 is very slightly recessed, so that it is difficult to mention to be clearly recessed.

And when, as shown in Fig. 4 (c), the outside diameter ds of the convex portion 11 becomes 0.55 times the maximum outside diameter dr of the kneading rotor 1 (ds/dr = 0.55), a visible outline between the convex portion 11 and the tip portion 8 becomes linear, and the recess 10 is hardly recognizable.

The above described relationship between the outside diameter ds of the convex portion 11 and the recess 10, as shown in Fig. 4 (a) to Fig. 4 (c), holds even if the distance is reduced between the tip portion 8 of the kneading flight 7 and the inner wall surface of the barrel 3, in other words, with respect to the kneading rotor 1 such that the ratio of db and dr (dr/db) is 0.98.

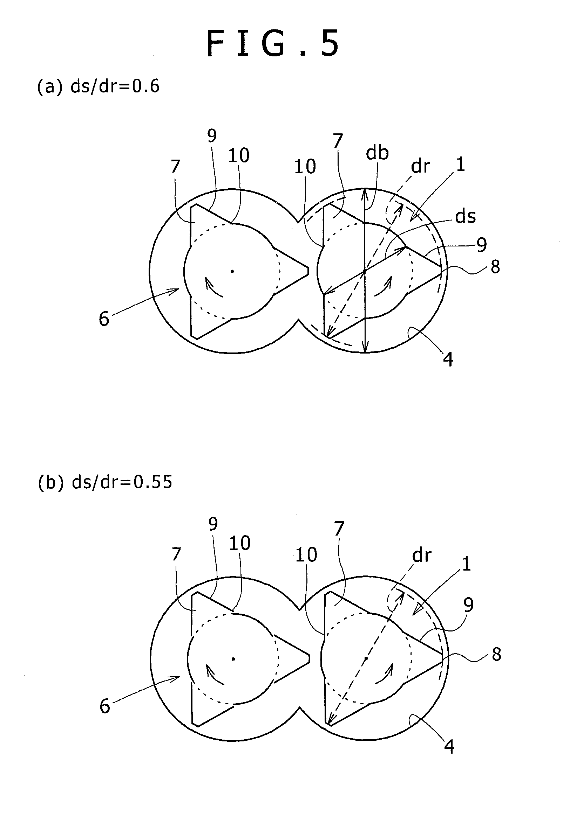

For example, as shown in Fig. 5 (a), even in the case of the kneading rotor 1 such that the ratio of db and dr (dr/db) is 0.98, when the outside diameter ds of the convex portion 11 is 0.6 times the maximum outside diameter dr of the kneading rotor 1 (when ds/dr = 0.6), there is a clearly recessed portion between the convex portion 11 and the tip portion 8. In other words, it is clearly recognized to be the recess 10.

However, when, as shown in Fig. 5 (b), the outside diameter ds of the convex portion 11 becomes 0.55 times the maximum outside diameter dr of the kneading rotor 1 (ds/dr = 0.55), the shape recognized between the convex portion 11 and the tip portion 8 is not mentioned to be recessed. In other words, it is not recognized to be the recess 10.

It has next been ascertained by experiments how the temperature rise of a material is and what variations of the material temperature exist within the barrel 3 when kneading was performed using above described kneading rotor 1 of Fig. 4 (a) to Fig. 4 (c), and Figs. 5 (a) and 5 (b).

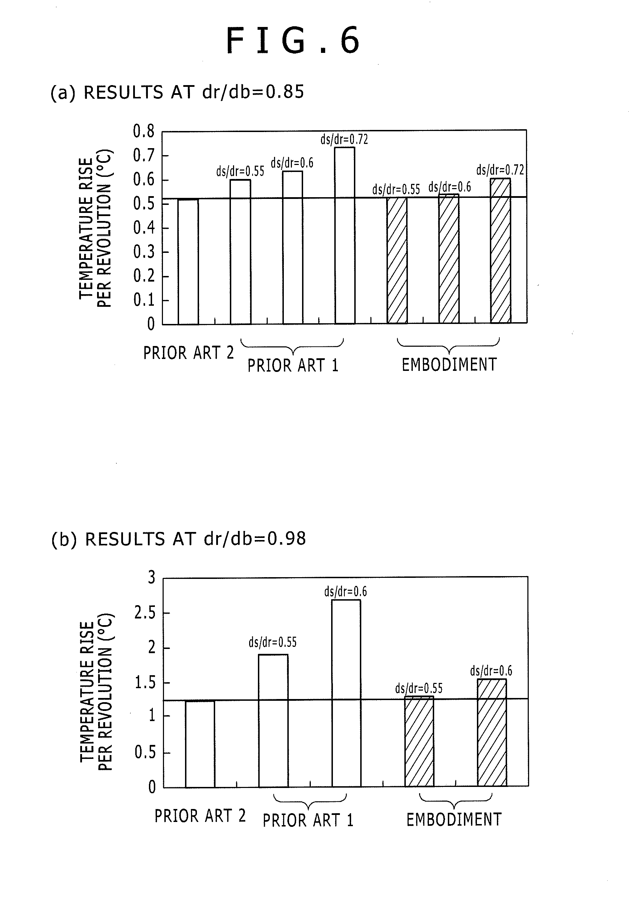

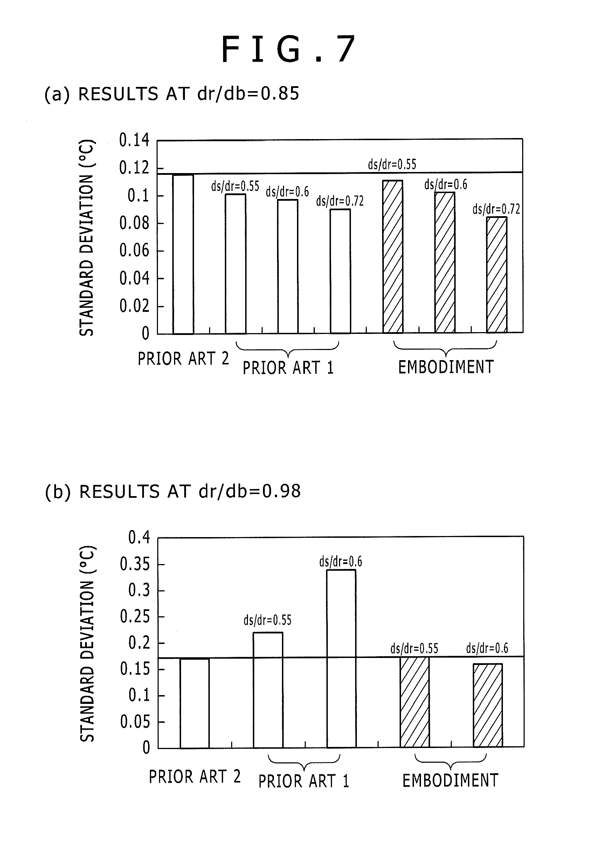

Figs. 6 (a) and (b) show results obtained by measuring how the temperature of a material rises per revolution when kneading rotors of prior arts 1 and 2, and the kneading rotor 1 of the present embodiment are rotated a single revolution. Further, Figs. 7 (a) and (b) each show results obtained by measuring variations of the material temperatures within the barrel 3, as the standard variations of measured temperatures. Note that Fig 6 (a) and Fig. 7 (a) each show the results for when the ratio (dr/db) is 0.85, and Fig 6 (b) and Fig. 7 (b) each show the results for when the ratio (dr/db) is 0.98.

When viewing Fig. 6 (a), the temperature rise in the prior art 2 is in the range of slightly above 0.5 degrees C, whereas in the prior art 1, as ds/dr becomes from 0.55 to 0.6 to 0.72, each temperature rise increases by 0.6 to 0.7 degrees C. As compared to this, even if ds/dr increases from 0.55 to 0.6 to 0.72, the temperature rise in the present embodiment is 0.5 to 0.6 degrees C, which rate remains small, and does not increase as high as that of the prior art 1. Note that ds in the prior art 1 represents the radius of a circle inscribed in the visible outline of the kneading rotor 14.

Further, when viewing Fig. 7 (a), the temperature variations of the material of the prior art 2 (the standard variations of the measured temperatures) exceeds 0.11 degrees, whereas as ds/dr increases from 0.55 to 0.6 to 0.72, each variation of the prior art 1 is reduced to 0.09 degrees C to 0.10 degrees C. As compared to this, the temperature variation in the present embodiment, when ds/dr is 0.55, is 0.11 degrees C, which is great; however, when ds/dr is 0.6 or 0.72, the temperature variation is 0.085 degrees C to 0.10 degrees C, and is smaller than that of the prior art 1.

It can be judged from the results of Figs. 6 (a) and 7 (a) that in the kneading rotor 1 of the present embodiment, both temperature rise of the material and temperature variations in the material can be restrained. In addition, in the present embodiment, the temperature rise and temperature variations are reduced in the results for when ds/dr = 0.6 or 0.72, as compared to those for when ds/dr = 0.55. From this fact, it can also be judged that ds/dr is preferably made to be 0.6 or more.

Further, as is the case with the results for when the above described ratio (dr/db) is 0.85, also in terms of the results for when the ratio (dr/db) shown in Figs. 6 (b) and 7 (b) is 0.98, the temperature rise of the material and the temperature variations in the material can be restrained in the results of the kneading rotor 1 according to the present embodiment more than those of the prior arts 1 and 2.

From the above description, it is judged that the use of the kneading rotor 1 according to the first embodiment allows for positive restraint of a temperature rise of the material and localized variations in temperature within the material.

### (Second Embodiment)

The kneading rotor 1 according to the second embodiment and the kneading machine 2 provided with this kneading rotor 1 will next be described.

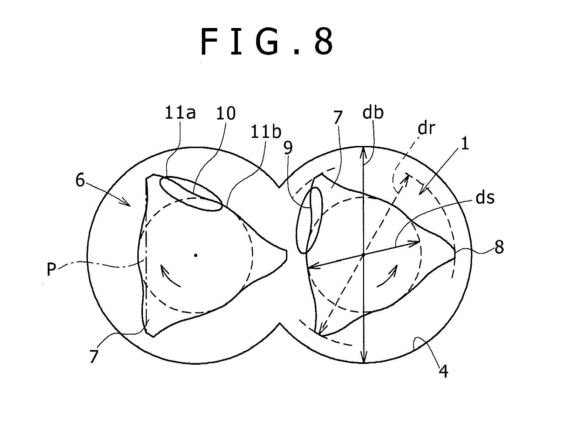

Fig. 8 shows a cross-sectional view of the kneading rotor according to the second embodiment. In the kneading rotor 1 according to the second embodiment, in a cross-section perpendicular to the shaft center of the kneading rotor 1, unlike the simple recessed working face 9 as in the first embodiment includes the working face 9 is formed to have complex irregularities so that the cross-section of the working face 9 is wavy. In other words, in the working face 9 of the kneading flights 7 according to the second embodiment, a first convex portion 11a, which is provided closer to the tip portion 8, and a second convex portion 11b, which is provided farther from the tip portion 8, are provided. The portion between the first convex portion 11a and the second convex portion 11b is made to be the recess 10.

In other words, in a cross-section perpendicular to the shaft center of the kneading rotor 1, the working face 9 of the kneading flight 7 according to the second embodiment is curved in the neighborhood of the tip portion 8 so as to bulge out radially outwardly relative to a reference line P (dash-dot lines in the figure) connecting between the circumferentially adjacent tip portions. This portion which curved toward radially outwardly is the first convex portion 11a. On the side of the first convex portion 11a, the second convex portion 11b is formed which projects radially outwardly more greatly than the first convex portion 11a. A portion gently recessed radially inwardly between the first convex portion 11a and the second convex portion 11b, is made to be the recess 10.

In this way, even when the working face 9 is formed into a intricately curved shape and if there is the recess 10 that recedes radially inwardly at the working face 9, the temperature rises of the material and the localized variations in temperature in the material are able to be restrained.

It should be understood that the embodiments disclosed herein are illustrative and not restrictive in all aspects. The scope of the present invention is defined by the claims rather than the above description, and all modifications that fall within the scope of the claims and their equivalent meaning are intended to be included. Further, in the embodiment disclosed herein, data, not explicitly disclosed, such as, for example, driving and operating conditions, various parameters, the dimensions, weights, and volumes of components, does not depart from the scope to be normally embodied by those skilled in the art, and values are employed that an ordinary person skilled in the art would be able to readily envision.

This application is based on Japanese Patent Application (Application No. 2012-182676) filed on August 21, 2012, the contents of which are incorporated herein by reference.

### EXPLANATION OF REFERENCE NUMERALS

- 1: Kneading rotor
- 2: Kneading machine
- 3: Barrel
- 4: Circular through-holes
- 5: Hopper
- 6: Rotor segment
- 7: Kneading flight
- 8: Tip portion
- 9: Working face
- 10: Recess
- 11: Convex portion
- 11': Top of convex portion
- S: Reference line
- P: Reference line
- 11b: First convex portion
- 11a: Second convex portion

## Claims

1. A kneading rotor, rotatably disposed about a horizontally oriented shaft center, that includes at least two or more of kneading flights that are disposed about the shaft center and knead a material,
wherein in a cross-section perpendicular with the shaft center of the kneading rotor, the kneading flights each have a working face that faces the material when the kneading rotor is rotated, and
wherein a recess resulting from the working face being partially recessed radially inwardly is formed on the working face of each kneading flight.

2. The kneading rotor according to claim 1,
wherein in the cross-section perpendicular to the shaft center of the kneading rotor, a convex portion resulting from a surface of the kneading flight partially projecting radially outwardly is formed between circumferentially adjacent kneading flights, and
wherein a place between a tip portion of the kneading flight and the top of the convex portion is made to be the recess.

3. The kneading rotor according to claim 2, wherein an outer peripheral surface of the convex portion is formed into a cylindrical surface having the shaft center of the kneading rotor as the center line.

4. The kneading rotor according to claim 2, wherein the convex portion is formed such that the diameter from the shaft center of the kneading rotor to the top of the convex portion is 0.6 times or more the diameter from the shaft center of the kneading rotor to the tip portion of the kneading flight.

5. The kneading rotor according to claim 3, wherein the convex portion is formed such that the diameter from the shaft center of the kneading rotor to the top of the convex portion is 0.6 times or more the diameter from the shaft center of the kneading rotor to the tip portion of the kneading flight.

6. The kneading machine, comprising the kneading rotor according to any one of claims 1 to 5, and a barrel having a circular through-hole extended therethrough into which the kneading rotor can be inserted.
